# EUROPÄISCHE PATENTANMELDUNG

(11) **EP 0 575 839 A2**
(43) Veröffentlichungstag der Anmeldung: **29.12.1993**
(21) Anmeldenummer: 93109407.2
(22) Anmeldetag: 11.06.1993
(51) Int. Cl.: H01B 3/02, H01B 7/34, H01B 7/28, H02G 1/14, C04B 12/04, C04B 28/24

(54) **Vorrichtung zum Schutz bzw. zum Verbinden elektrischer Stromkreise**

(30) Priorität: 22.06.1992 DE 4220317
(71) Anmelder: OTTO DUNKEL GMBH FABRIK FÜR ELEKTROTECHNISCHE GERÄTE, D-84453 Mühldorf (DE)
(72) Erfinder: Hinterwaldner, Rudolf, D-81547 München (DE)
(74) Vertreter: Patentanwälte Leinweber & Zimmermann

(57) **Zusammenfassung**

Die Vorrichtung zum Schutz bzw. zum Verbinden elektrischer Stromkreise besitzt ein Gehäuse, das mindestens eine der Einführung mindestens eines elektrische Leitungen umfassenden Kabels dienende und mindestens eine weitere, die Herstellung fester oder lösbarer Verbindungen über die elektrischen Leitungen zu Anschluß- oder Steuerleitungen ermöglichende Öffnung umfaßt und mit einer isolierenden Verguß- bzw. Einbettmasse gefüllt ist. Erfindungsgemäß besteht die Verguß- bzw. Einbettmasse zur Sicherstellung einer hohen Temperaturbeständigkeit und damit Kurzschlußsicherheit auch unter extrem hohen Temperaturen bei dennoch hohem Isolationswiderstand aus einer Bindemittelmatrix, die als Hauptbestandteil eine ausgehärtete Mischung an
a) feinteiligem SiO₂ und
b) zumindest teilweise wasserlöslichen Silicaten umfaßt.

## Beschreibung

Die Erfindung bezieht sich auf eine Vorrichtung zum Schutz bzw. zum Verbinden elektrischer Stromkreise, mit einem Gehäuse, das mindestens eine der Einführung mindestens eines elektrische Leitungen umfassenden Kabels dienende und mindestens eine weitere, die Herstellung fester oder lösbarer Verbindungen über die elektrischen Leitungen zu Anschluß- oder Steuerleitungen ermöglichende Öffnung umfaßt und mit einer isolierenden Verguß- bzw. Einbettmasse gefüllt ist.

Bei bekannten Vorrichtungen dieser Art, bei denen es sich um Kabelabschlußeinrichtungen, -Abzweigkästen, -Endverteiler bzw. -Muffen, insbesondere jedoch Steckverbinder handeln kann, hat sich die Tatsache als nachteilig herausgestellt, daß sie nur in geringem Maß höheren Temperaturen ausgesetzt werden können. Unter hohen Temperatureinwirkungen, wie sie bei Einsatz in Atomkraftwerken und insbesondere im Brandfall auftreten, findet eine Beeinträchtigung der Verguß- und Einbettmasse statt; es kann zu einer Auflösung und in Extremfällen sogar zu einer Umwandlung unter Verflüssigung und Vergasung der Masse kommen. Das Isolationsvermögen der Masse geht unter solch extremen Hitzeeinwirkungen, denen die Vorrichtungen unterworfen sein können, dann in relativ kurzer Zeit verloren.

An dieser Stelle ist zu erwähnen, daß in der Elektro- und Elektronikindustrie heute vorzugsweise duromere Rückgratpolymere auf organischer Basis als Bindemittelmatrizes für Isolierstoffe eingesetzt werden. Diese duromeren Stoffe sind vorzugsweise solche aus Epoxid- und Polyurethanharzen, Amino- und/oder Phenolplaste. In jüngerer Zeit sind auch Hybridsysteme mit z.B. Isocyanuraten, Polyimiden und anderen stickstoffhaltigen Polymeren bekannt geworden, um vor allem die Dauertemperaturbeständigkeiten zu verbessern. Ein besonders bewährter Isolierwerkstoff sind und bleiben die Epoxidharze, weil sie aufgrund ihrer günstigen Verarbeitungs- und Werkstoffeigenschaften neuzeitliche Lösungen u.a. in der Starkstromtechnik, bei elektronischen und elektromagnetischen Bauteilen ermöglicht haben. Trotz der hervorragenden Eigenschaftsmerkmale der duromeren Werkzeugharze, insbesondere der Epoxidharze läßt sich eine Vielzahl von Verguß- und Einbettproblemen mit ihnen nicht lösen, weil ihre organischen Bindemittelmatrizen bei erhöhten Temperaturen keine Dauerbeständigkeiten besitzen und in einzelnen Fällen, trotz hohem Füllgrad mit anorganischen Füllstoffen, noch einen relativ hohen Schwund aufweisen. Mit den in jüngster Zeit bekanntgewordenen Hybridsystemen, wie z.B. auf der Grundlage von Epoxidharzen und Isocyanuraten, konnten zwar Bindemittelmatrizes mit höheren Glasübergangstemperaturen entwickelt werden, die kurzzeitig bei Temperaturspitzen bis etwa 360°C standhalten. Ihre Dauertemperaturbelastung bleibt jedoch bei ca. 250 bis 300°C limitiert.

Für den Temperaturbereich von 300°C bis 1.500°C besteht somit weiterhin eine Lücke in den Bindemittelmatrizes, die neben einer Dauertemperaturbeständigkeit zusätzlich hohe Isolationswiderstände besitzen.

Um diese Lücke ausfüllen zu können, war die gewerbliche Wirtschaft bemüht, auf anorganischer Grundlage solche hochtemperaturbeständige Isolierstoffe zu entwickeln. Als Rohstoffe wurden u.a. Aluminiumoxid, Siliciumdioxid, Aluminiumsilikate eingesetzt. Trotzdem ließen sich keine geeigneten Verguß- und Einbettmassen herstellen, weil hierzu die Kenntnisse über den Aufbau der Bindemittelmatrixstruktur fehlte. Aber auch andere essentielle Faktoren hatten negative Einflüsse auf die Endeigenschaften. Hierzu gehören u.a.
- Verunreinigungen im Füllstoff, die z.B. die elektrischen Eigenschaften verschlechtern;
- ungleichmäßige Kornverteilung bei den Bindemitteln und Füllstoffen, die zu Störungen der räumlichen Bindemittelmatrixstrukturen führen und die mechanischen Eigenschaften verschlechtern;
- sehr langsame Härtungsprozesse (bis zu 30 Tage bei Raumtemperaturen) bei "leichter wasserlöslichen" Bindemittelbestandteilen, zusätzliches Kistallisieren während des Härtungsprozesses und Ausbildung von größeren Kristallen, wodurch sich keine homogenen, widerstandsfähigen Bindemittelmatrizes ausbilden können;
- lufttrocknende Verguß- und Einbettmassen, die in der Regel aus Wassergläsern mit Quarz- und Aluminiumoxid-Füllstoffen bestehen, lassen sich im allgemeinen nur mit Temperaturen bis max. 60°C in Gegenwart von Umluft aushärten, weil höhere Temperaturen beim Härtungsbeginn - infolge des erhöhten Dampfdrucks des Wassers - zu Schädigungen, Rißbildungen und dergleichen in der Masse führen, weshalb keine hochvolumigen Vergüsse oder dickschichtigen Einbettungen mit diesen Massen vorgenommen werden konnten.

Aber auch chemisch abbindende anorganische Verguß- und Einbettmassen sind bekannt geworden, die in der Regel auf Phosphaten und Alkalisilikaten aufgebaut sind. Die Härtungsreaktionen laufen entweder im sauren Medium als Kondensationsreaktion ab oder als Fällungsreaktion durch Einstellen einer bestimmten Ionenkonzentration. Saure Kondensationsreaktionen führen jedoch gegenüber metallenen Werkstoffen u.a. zu Korrosionserscheinungen, wie dies z.B. mit Zirkon-Magnesium-Phosphaten der Fall ist. Insgesamt werden damit inhomogene Bindemittelmatrizes mit wechselnden Hochtemperaturbeständigkeiten und Isolationswerten erhalten.

Aber auch die Beständigkeiten gegenüber Wasser, Wasserdampf, Alkalien u.v.a.m. lassen stark zu wünschen übrig.

Bedingt durch diese und andere Eigenschaften besitzen die anorganischen Verguß- und Einbettmassen nach dem Stand der Technik eine Vielzahl von Schwächen, so daß trotz einer möglichen statischen Temperaturbeständigkeit um 1.000°C wirtschaftlich und technisch nur ein sehr beschränktes Einsatzspektrum gegeben ist. Dies vielfach auch nur deshalb, weil der Markt keine alternativen Möglichkeiten bietet.

Da aber im Hightech-Bereich nicht nur aus technischen sondern auch aus wirtschaftlichen Gründen die Elektro- und Elektronik-Technologie nach Verguß- und Einbettmassen mit steigendem Bedarf sucht, die nach dem Härten eine hochtemperaturbeständige Bindemittelmatrix mit hohem Isolationswiderstand ausbilden, mußten alternative, wirtschaftliche Innovationen entwickelt werden.

Aufgabe und Ziel der vorliegenden Erfindung ist daher, die Vorrichtung der eingangs genannten Art so weiter auszugestalten, daß sie mit einer Verguß- bzw. Einbettmasse auf der Basis anorganischer Bindemittelmatrizes bei hohen Isolationswerten und langer Lebensdauer hohe Temperaturen auszuhalten vermögen. Bei den geforderten hohen Temperaturbelastungen (750°C, 3h und 1000°C, 10 min) zersetzen sich nämlich die Kabel- und Aderisolationsmaterialien. Es bleibt als Isolation nur noch eine Art Asche mit sehr hohem Anteil an Glasfasern zurück. Diese Asche zerfällt jedoch bei kleinsten mechanischen Belastungen. Aus diesem Grund ist es wichtig, um die Funktionsfähigkeit der Steckverbindung zu gewährleisten, daß die im Kabelanschlußbereich liegenden Einzeladern durch den Verguß gegen mechanische Belastungen geschützt werden. Dabei ist zu berücksichtigen, daß die Vorrichtungen, z.B. Steckverbinder der Explosionsschutzklasse Ex II d entsprechen müssen. Die Regeln für die Auslegung von elektrischen Komponenten schreiben vor, daß die für einen Einsatz konzipierten Teile keine "schädlichen Räume" haben dürfen. Unter "schädlichen Räumen" sind bei derartigen Anwendungen Volumina zu verstehen, in denen sich z.B. Gase oder Staub-/Luftgemische ansammeln könnten, die bei Entzündung zur Zerstörung führen würden.

Die Aufgabe wird erfindungsgemäß dadurch gelöst, daß die Verguß- und Einbettmasse zur Sicherstellung einer hohen Temperaturbeständigkeit und damit Kurzschlußsicherheit auch unter extrem hohen Temperaturen bei dennoch hohem Isolationswiderstand aus einer Bindemittelmatrix besteht, die als Hauptbestandteil eine ausgehärtete Mischung an
a) feinteiligem SiO₂ und
b) zumindest teilweise wasserlöslichen Silicaten umfaßt.

Wenn die silicathaltige Bindemittelmatrix aus einer dreidimensionalen Gitterstruktur aufgebaut ist, sorgt sie zum einen für eine hervorragende mechanische Stabilität der erfindungsgemäßen Verguß- und Einbettmasse und außerdem für eine extrem hohe Temperaturbeständigkeit mit hohem Isolationswert. Ferner können die Zuschlagstoffe, wie z.B. Füllstoffe, Fasern feindispers verteilt in die Bindemittelmatrix aufgenommen werden.

Erfindungsgemäße Vorrichtungen mit einer Masse auf der Basis einer silicathaltigen Bindemittelmatrix lassen außerdem Temperaturdauerbeständigkeiten von über 1000°C zu. Dabei sind Temperaturbeständigkeiten bis zu 1500°C zu beobachten. Weitere Vorteile sind, daß die Bindemittelmatrix nicht brennbar ist. Außerdem weist das Bindemittel eine hohe Beständigkeit gegen Lösungsmittel, Fette, Öle, Treibstoffe aller Art sowie gegen starke Laugen und Säuren auf. Neben der extrem hohen Härte der Bindemittelmatrix ist eine hohe Biegefestigkeit, z.B. bis zu 30 MPa, eine hohe Druckfestigkeit, z.B. bis zu 90 MPa, ein hoher Elastizitätsmodul und eine hohe Schwingungsdämpfung zu beobachten.

Ferner weist die Bindemittelmatrix einen sehr niedrigen thermischen Wärmeausdehnungskoffezienten (etwa 4 bis 9 x 10⁻⁶K⁻¹) auf, ferner wurden äußerst niedrige Schrumpf- und Kriecheigenschaften festgestellt, die wesentlich niedriger als bei kunstharzgebundenen Verguß- und Einbettmassen sind. Ferner wird eine sehr hohe Dimensionsstabilität bei Temperaturwech.-selbelastungen gefunden. Außerdem ist die Bindemittelmatrix umweltfreundlich, so daß keine Entworgungsprobleme auftreten können.

Bei der Herstellung ergeben sich die Vorteile, daß niedrige Verarbeitungstemperaturen zwischen 10 und 100°C möglich sind, wobei ein schutzgasfreies und lösungsmittelfreies Verarbeiten möglichist. Als Lösungsmittel ist lediglich Wasser zum Anteigen notwendig, das bei der Vernetzungsreaktion teilweise mit in die Matrix eingebaut werden kann, teilweise bei anschließenden Nachhärtevorgängen entweicht. Die Ausgangsmasse ist gieß-, extrudier-, spritz- und preßbar, so daß alle gewöhnlichen Verarbeitungstechniken eingesetzt werden können. Der Härtungsvorgang selbst, der durch Wärmeenergie unterstützt wird, kommt ohne Preßdrücke aus, d.h., es sind auch keine aufwendigen Apparaturen zur Herstellung der Verguß- und Einbettmassen notwendig.

In einer weiteren Ausgestaltung der Erfindung ist die Bindemittelmatrix aus der genannten einer Mischung an feinteiligem SiO₂ und zumindest teilweise wasserlöslichen Silicaten aufgebaut, die bei erhöhter Temperatur ausgehärtet ist.

Diese Mischung ergibt eine durch Polykondensation dreidimensional verzweigte regelmäßig aufgebaute Bindemittelmatrix, die für eine hervorragende Qualität und Lebensdauer der Verguß- und Einbettmasse sorgt. Ferner hat diese Maßnahme den Vorteil, daß die Ausgangsstoffe ein sehr gutes Benetzungsverhältnis aufweisen, d.h. daß die in die Bindemittelmatrix eventuell einzuarbeitenden Zuschlagstoffe gleichmäßig in die Bindemittelmatrix eingebaut werden.

Als reaktive Bestandteile bei der Herstellung der erfindungsgemäßen Bindemittelmatrix eignen sich amorphes SiO₂, gegebenenfalls Al₂O₃ und, soweit anwesend, das ungelöste SiO₂ der amorphen wasserhaltigen Kieselsäure. Besonders bevorzugt sind Gemische aus amorphem SiO₂ und Al₂O₃, das in Gewichtsverhältnissen von SiO₂ zu Al₂O₃ im Bereich von 5 - 98 SiO₂ Gew.-% zu 95 - 2 Gew.-% Al₂O₃, vorzugsweise von 5 - 80 Gew.-% zu 95 - 20 Gew.-% vorliegen kann.

Das SiO₂ liegt vorzugsweise in amorpher, insbesondere wasserfreier Form vor. Diese Form wird auch für das feinteilige Gemisch aus SiO₂ und Al₂O₃ bevorzugt, wenn auch das Al₂O₃, z.B. zum Teil in kristalliner Form vorliegen kann. Das SiO₂ kann auch aus der amorphen, wasserhaltigen Kieselsäure stammen. Die feinteiligen Einzelbestandteile und oder Gemische haben eine Partikelgröße ≦ 50 µm, vorzugsweise ≦ 40 µm insbesondere ≦ 10 µm. Je kleiner die Partikelgrößen sind desto dichter und stabiler werden die erfindungsgemäßen Bindemittelmatrixen.

Zur Ausbildung von spezifischen Bindemittelmatrizes gemäß vorliegender Erfindung, insbesondere zur Erzielung von hoher Temperaturbeständigkeit und Dimensionsstabilität, ist der Einsatz von biogenen Kieselsäuren angezeigt, wie überraschenderweise gefunden wurde. Sie besitzen amorphe Strukturen und werden in ihren mineralogischen Zusammensetzungen dem Tridymit und/oder Cristobalit zugeordnet. Die biogenen, amorphen Kieselsäuren lassen sich u.a. aus Reisschalenaschen gewinnen. Sie besitzen Sinterpunkte um 1.500°C und Schmelzpunkte um 1.600°C. Die Korngrößen liegen bei ≦ 5 mm, vorzugsweise ≦ 3 mm, insbesondere ≦ 2 mm. Die SiO₂ - Gehalte sind ≧ 90° insbesondere ≧ 95%. In den erfindungsgemäßen Verguß- und Einbettmassen haben sie duale Funktionen, wobei die als Bindemittel und/oder "verstärkende Füllstoffe" vorherrschend sind.

Die Oxide können Verunreinigungen wie Eisen, Natrium, Kalium und Calcium usw. enthalten. Sofern die schwermetallhaltigen Verunreinigungen ≦ 0,5% liegen und in die Bindemittelmatrix dispers eingebettet sind, verändern sie vielfach den Isolationswiderstand nicht. Die oxidischen Bestandteile, also SiO₂ und/oder Al₂O₃ liegen im Verhältnis zu den wasserlöslichen Silicaten im Verhältnis 80 bis 20 : 5 bis 60, insbesondere in einem Mengengrößenbereich von 15 Gew.-%, bezogen auf das Gesamtgemisch der beiden Bestandteile vor. Als besonders reaktive Bestandteile eignen sich Stäube aus Hochtemperaturschmelzprozessen, Filterstäube, Elektrofilterasche aus Hochtemperaturkraftwerken, calcinierte und gemahlene Bauxite.

Für Bindemittelmatrizes mit besonders hohem Isolationswiderstand ≧ 10⁶ Ω ,insbesondere ≧ 10⁸ Ω , wird erfindungsgemäß bevorzugt Aluminiumsilikat, insbesondere dehydratisiertes Aluminiumsilikat, verwendet. Das Aluminiumsilikat kann u.a. ein Kaolinit als Al₂O₃ · 2SiO₂ · H₂O und Metakaolinit (dehydratisiertes Kaolinit) als Al₂O₃ · 2SiO₂ sein, wobei auch Übergangszustände brauchbar sind. Bevorzugt sind Metakaolinite, da diese eine höhere Reaktivität besitzen.

Beim Einsatz von hydraulischen Bindemitteln, wie sie nachstehend beschrieben sind, ist ein Minimumgehalt an Metakaolinit schon deshalb erforderlich, wie überraschenderweise gefunden wurde, um der ausgehärteten Masse eine höhere Haltbarkeit zu verleihen.

Besonders vorteilhaft sind solche Zusätze an reaktiven Bestandteilen, die in Gegenwart der vorstehenden polykondensierenden Bestandteile hydraulisch abbinden, wodurch sich Hybridsysteme ausbilden. Hierzu gehören die Klinkerphasen aus der Zementherstellung, wie beispielsweise das Alit (C₃S), das Tricalciumaluminat (C₃A), wobei C = Calciumoxid, S = Siliciumdioxid und A = Aluminiumoxid bedeuten, Tonerde-Schmelzzement, Anhydride, Gips, wasserfreie Erdalkali und Magnesiumoxide.

Als wasserlösliche Silicate, die als Härter für die Oxide von SiO₂ und Al₂O₃ wirken, eignen sich insbesondere Alkali- und/oder Ammoniumsilicate, die allein oder in Abmischungen eingesetzt werden können. Sie besitzen im allgemeinen einen Überschuß an freiem Alkali und/oder Ammonium. Das Molverhältnis zwischen Alkali bzw. Ammonium zu Siliciumoxid liegt im allgemeinen zwischen 1,0 und 5 Mol, vorzugsweise zwischen 1,5 bis 4 Mol SiO₂ je Mol Alkali bzw. Ammonium. Besonders bevorzugt sind Kali- und/oder Ammoniumwasserglas, weil sie insbesondere gute und homogene physikalische Eigenschaften der strukturbildenden Matrix verleihen und die notwendigen Zuschlagstoffe sehr gut einbinden. Die Alkali- bzw. Ammoniumsilicate können auch in wäßriger Form als Zubereitungen vorliegen.

Besonders vorteilhaft können auch anstelle der Silicate deren Bildungskomponenten, nämlich die entsprechenden Oxide bzw. Hydroxide der Alkali bzw. des Ammoniums und amorphe, disperspulverförmige, wasserhaltige Kieselsäuren enthalten sein. Diese Maßnahme hat den Vorteil, daß diese Prekursoren der Silicate als Feststoffe gut lagerbar sind und erst vor der Verarbeitung mit Wasser angeteigt werden können. Somit kommt man gemäß dieser Erfindung zu reaktivern Einkomponentensystemen, die besonders einfach handhabbar sind.

Es können besonders vorteilhaft auch Salze der Fluorkieselsäure allein oder in Verbindung mit den vorstehend genannten Alkalisilicaten als Härter eingesetzt werden. Hierzu gehören Verbindungen der allgemeinen Formel

M^{I}2[SiF₆]

M^{I} = einwertiges Metall.

Als Beispiele seien Alkali- und Erdalkali-Fluorsilicate, wie Natrium, Bariumhexafluorsilicate genannt. Auch organische Fluorosilicate sind geeignet, wie z.B. Bis-(methyl-ammonium)-fluorosilicat, Bis-(dibutylammonium)-Fluorosilicat,Dianiliniumfluorosilicat.

Die erfindungsgemäße Bindemittelmatrix entsteht entweder durch einen hydraulischen und/oder polykondensierenden Vorgang. Über diese Härtungsmechanismen lassen sich nicht nur ein- und zweikomponentige Verguß- und Einbettmassensysteme herstellen, sondern auch die Abbindeparameter in relativ weiten Grenzen variieren. Hierzu gehören die sogenannten Topfzeiten, Härtungstemperaturen die Grün- und Endfestigkeiten.

Da das Wasser bei den erfindungsgemäßen polykondensierenden, die Bindemittelmatrix aufbauenden Substanzen nur Vehikel- und Benetzungsfunktionen besitzt, kann dies bei Hybridsystemen zur Aktivierung der hydraulisch abbindenden, die Bindemittelmatrix ausbildenden Sustanzen genutzt werden, wodurch eine schnellere Grünfestigkeit erreicht wird.

Zuschlagstoffe, die sich insbesondere eignen, um in die erfindungsgemäße Bindemittelmatrix eingebunden zu werden, sind wie folgt:
- **Füllstoffe**
   Wollastonit, Glimmer, anorganische Sulfate, wie z.B. Bariumsulfat, anorganische Carbonate, wie z.B. Calciumcarbonat, anorganische Oxide, wie z.B. Siliciumdioxid (Quarzmehle)oder dergleichen.

Falls es bestimmte Anwendungsgebiete erforderlich machen, können Verstärkungsmittel in Form von Fasern hinzugefügt werden.
**Beispiele für anorganische Fasern sind:**
Glasfasern, Kohlenstoff-Fasern, Steinwolle, Aluminiumsilicat- und Aluminiumoxid-Fasern, Keramik-Fasern, Siliciumcarbid-Fasern etc., sofern sie nicht den Isolationswiderstand reduzieren.
**Beispiele für organische Fasern:**
Phenol-, Aramid-Fasern und dergleichen.

Bei diversen Einsätzen von Verguß- und Einbettmassen werden oftmals poröse Strukturen gefordert, um schalldämpfende und wärmeisolierende Funktionen zu übernehmen und/oder das Eigengewicht zu reduzieren. Es ist daher bei einer Ausgestaltung der Erfindung vorgesehen, selbsttragende Strukturschäume dadurch herzustellen, daß vor oder während des Abbindeprozesses Bläh- und/oder Treibmittel zugesetzt werden. Als Bläh- und/oder Treibmittel sind erfindungsgemäß u.a. Peroxi-Verbindungen, wie z.B. Wasserstoffperoxid, Persulfate, Perborate, Percarbonate, organische Peroxide, wie z.B. Dibenzoylperoxid oder auch solche Verbindungen geeignet, die beim Kontakt mit Wasser Gase bilden oder sich aufblähen, wie z.B. Carbide, Aluminiumpulver, Metallhydride, Hydrazin-Derivate, Semicarbazide oder dergleichen. Auch durch das Einführen von Gasen, wie z.B. Luft, Stickstoff, Kohlendioxid während der Topfzeitphase lassen sich Schäume erzeugen. Diese Schäume können offen- oder geschlossenzellig sein, so daß sie eine große Einsatzbreite abdecken können. Aber auch durch Zusätze von sogenannten Mikrohohlkörpern, wie z.B. Mikroglashohlkugeln, lassen sich schaumartige Strukturen in der erfindungsgemäßen Bindemittelmatrix entwickeln.

Es ist auch möglich, Porenstrukturen dadurch herzustellen, daß Pulver oder Faserstoffe als Porenbildner zugesetzt werden, die beim Aushärten verdampfen, ausschmelzen oder schrumpfen.

Des weiteren können die erfindungsgemäß für Vorrichtungen der eingangs genannten Art zum Einsatz gelangenden Verguß- und Einbettmassen weitere Füllstoffe wie Pigmente Farbstoffe, Thixotropiermittel oder auch andere Zuschlagstoffe zur Regulierung der rheologischen Eigenschaften, der Benetzung oder dergleichen zugesetzt werden.

Um den Wassergehalt bzw. den Bindemittel/Wasser-Faktor beim Anteigen der homogenen Ausgangsbestandteile niedrig zu halten und/oder niedrigere Viskositäten zum Gießen, Spritzen oder Extrudieren einstellen zu können, können dem Anmachwasser, dem flüssigen Härter und/oder der angeteigten Masse bekannte Frischmörtelzusatzmittel zum Verflüssigen und/oder Plastifizieren zugesetzt werden, wie überraschenderweise gefunden wurde. Solche Zusatzmittel sind u.a. Ligninsulfonate, Melaminformaldehydkondensatsulfonate, Naphthalinformaldehydkondensatsulfonate, Tenside, Abietinsäureabkömmlinge und bestimmte Eiweißhydrolysate. Die Zusatzmengen sind im allgemeinen = 5% - bezogen auf das Bindemittelgewicht.

Zur Stabilisierung eines hohen Isolationswiderstandes während und/oder im Einsatz der erfindungsgemäßen Massen, läßt sich die event. vorhandene Hygroskopizität durch eine hydrophobe Ausrüstung beseitigen. Für die wasserabweisende Ausrüstung eigenen sich unpolare organische, metall- und siliciumorganische und anorganische Verbindungen. Zu den vorwiegend einsetzbaren Hydrophobierungsmitteln gehören u.a. Aluminium- und Zirkoniumsalze, Chromkomplexsalze, Silane, Silicone, perfluorierte organische Verbindungen, sofern sich unter relativen Feuchtebedingungen keine Leitfähigkeit aufbauen läßt. Deshalb sind die Silane und/oder Silikone besonders bevorzugt, weil sie sich als artverwandte Verbindungen zumindest partiell in die Bindemittelmatrizes integrieren lassen.

Eine Hydrophobie kann aber auch dadurch erzielt werden, daß man die Erdalkali-Kationen-Konzentrationen in den Massezusammensetzungen erhöht oder mit Erdalkalioxiden nachträglich Imprägnierungen oder dgl. vornimmt. Besonders wirksam und wirtschaftlich sind dabei Calciumverbindungen, die sich u.a. mit den noch reaktiven Silicaten zu unlöslichen Calciumsilicaten umsetzen.

Erfindungsgemäß wird vorzugsweise das innige, homogene Gemisch der Ausgangsbestandteile SiO₂ und wasserhaltiger Silicate und der notwendigen Zuschlagstoffe mit Wasser bis zur verformbaren Konsistenz angeteigt oder zunächst die Ausgangsbestandteile mit Wasser verarbeitet und dann die notwendigen Zuschlagstoffe unter Bildung einer fließfähigen, teigigen Konsistenz zugegeben und die Masse wird dann gegebenfalls nach Verformung ausgehärtet. Die aushärtenden Massen können auch auf ein Trägermaterial aus metallenen, anorganischen oder organischen Werkstoffen aufgebracht werden und anschließend aushärten. Solche Trägermaterialien können Stähle, Eisen, Holz, Steine, Beton, Kunststoffe wie Duro- oder Thermoplaste oder dergleichen sein.

Beim Herstellen der Kompaktmasse zum Isolieren kann die Masse zuvor mittels Vakuum entgast werden. Eine Entgasung kann aber auch an den vorgeformten Gießlingen oder bei Beschichtungen durch Rütteln oder Evakuieren erzielt werden.

Das Wasser oder ein wäßriges, alkalisches Medium kann dabei z.B. in Mengen von 5 - 70 Gew.-%, vorzugsweise 20 - 50 Gew.-%, bezogen auf die Gesamttrockenmasse, eingesetzt werden.

Die mit Wasser angeteigten Massen lassen sich durch Gießen, Extrudieren, Spritzen und Pressen verarbeiten.

Bei der Herstellung von kompakten Verguß- und Einbettmassen wird etwa während 1 bis 2 Stunden bei +85°C gehärtet, wobei eine exotherme Polykondensation einsetzt. Anschließend erfolgt ein Nachtrocknen bei 20 bis 50°C bis zur Gewichtskonstanz, um das restliche Haftwasser auszutreiben. Sind die Verguß- und Einbettmassen für Einsätze bei höheren Temperaturen vorgesehen, werden sie stufenweise auf Temperaturen von +80° bis 1500°C erhitzt, wobei eine Nachhärtung zu beobachten ist. Für Hochtemperatur-Einsatzbereiche ist allgemein eine stufenweise Aufheizung bis über die Einsatztemperaturen notwendig, um gute Temperatur- und Formbeständigkeit zu erzielen.

Stehen zur Härtung und zum Aufbau der erfindungsgemäßen Bindemittelmatrizes keine zusätzlichen Energieresourcen zur Verfügung, wie es z.B. bei vor-Ort-Montagen der Fall ist, können durch Zusatz von sogenannten Härtungsbeschleunigern die Härtungsreaktionen auch bei Tempeaturen ≧ 10°C, insbesondere bei 15 bis 30°C, durchgeführt werden. Als Härtungsbeschleuniger kommen wasserfreie Erdalkalioxide, wie z.B. ungelöschter Kalk, Aluminiumphosphate und die vorstehenden Klinkerphasen, Tonerdeschmelzzemente, Anhydride, Gips und eventuell Metallhydride infrage, wie erfindungsgemäß gefunden wurde, sofern sie beim Kontakt und/oder Lösen mit Wasser eine Wärmetönung von ≧ 500 joule/g verursachen.

Bei der Herstellung von porigen Verguß- und Einbettmassen härten die Massen bei 20°C in maximal 2 Stunden oder bei 50°C in etwa 1 Stunde aus. Ein Nachhärten kann bei +50 bis +100°C erfolgen. Sind die porigen Verguß- und Einbettmassen ebenfalls für den Hochtemperatureinsatz vorgesehen, so erfolgt ebenfalls ein stufenweises Aufheizen auf Temperaturen bis 1100°C.

Die Verguß- und Einbettmassen lassen sich erforderlichenfalls auch hydrophob ausrüsten, hierzu sind beispielsweise Silane, Polydimethoxysilane oder dergleichen geeignet.

Bedingt durch die niederen Verarbeitungstemperaturen ist mit den erfindungsgemäßen anorganischen Mitteln zum Herstellen der Bindemittelmatrix eine außerordentlich große Variationsbreite schon deshalb gegeben, weil alle vorstehenden und anderen Zuschlagstoffe einfach in die Strukturmatrix integrierbar sind.

Auf der Grundlage der erfindungsgemäßen Bindemittelmatrizes wird dem Fachmann eine für Vorrichtungen zum Schutz bzw. zum Verbinden elektrischer Stromkreise bestimmte abbindende Verguß- und Einbettmasse auf anorganischer Grundlage bereitgestellt, die sich u.a. durch folgende Vorteile und Fortschritte auszeichnet:
- leichte Verarbeitbarkeit
- umwelt- und ökologiefreundlich
- unkritische Mischungsverhältnisse der 2-Komponentensysteme
- einstellbare Topf- und Abbindezeiten
- auch bei Temperaturen unter 0°C verarbeitbar
- unter Wasser abbindend
- nicht brennbar
- außerordentlich wirtschaftlich im Vergleich zu Verguß- und Einbettmassen auf organischer Polymergrundlage

Die Eigenschaften der abgebundenen Verguß- und Einbettmassen sind u.a.:
- frühe Grün- und Endfestigkeiten, z.B. 30 Minuten
- Unbrennbarkeit, d.h. keine Rauchgasentwicklung
- Beständigkeiten gegenüber Lösemitteln, gegen schwache und starke Alkalien sowie gegen Schwefelsäure
- Oberflächenhärte nach Mohs 3 bis 8 einstellbar
- Raumgewichte bei Kompaktmassen: 1600 - 3500 kg/m³ bei Schaummasse: 200 - 1000 kg/m³
- Biegefestigkeit: 10 - 40 MPa einstellbar
- Druckfestigkeit: 20 - 100 MPa einstellbar
- E-Modul: 10.000 - 50.000 MPa
- lineare Wärmedehnung: 1 bis 8 x 10⁻⁶/k⁻¹
- hohe Schwingungsdämpfung
- niedrigeres Kriechverhalten im Vergleich zu organischen Verguß- und Einbettmassen
- Wärmeformbeständigkeit
- hohe Alterungsbeständigkeit
- hoher Isolierwiderstand ≧ 100 M Ω.

Wie sich aus den vorstehenden Darlegungen ergibt, werden in der erfindungsgemäßen Vorrichtung zum Schutz bzw. zum Verbinden elektrischer Stromkreise die Hohlräume zwischen den elektrischen Elementen untereinander und den Vorrichtungswandungen mit einer isolierenden, anorganischen Verguß- und Einbettmasse verfüllt, die sich in Gegenwart von Wasser verarbeiten lassen, ohne daß das Wasser an den Härtungsreaktionen beteiligt ist. Das Anmachwasser ist somit nur ein Vehikel als Suspensions- und/oder Dispersionsmittel, um die festen Bestandteile der erfindungsgemäßen Masse in einen verarbeitungsfähigen, flüssigen Aggregatzustand überzuführen. Das Anmachwasser ist nach der Polykondensation (Härtung) aus den ausgehärteten Güssen - meist durch Verdampfen - wieder zu entfernen.

Während die rheologischen Eigenschaften der Verguß- und Einbettmassen gemäß den vorgenannten Zusammensetzungen bei einfacheren Ausführungen der Vorrichtung ausreichend sind, um zu lunkerfreien Güssen zu kommen, ist es bei komplizierteren und verwinkelten Gehäusekonstruktionen erheblich schwieriger, die Hohlräume lunkerfrei auszugießen. Durch die Erhöhung des Anmachwassergehaltes läßt sich zwar partiell die Rheologie der Massen verbessern; dadurch wird jedoch Vergießen und Härten kosten- und zeitaufwendiger und stellt keine saubere technische Lösung dar.

Eine Verbesserung der rheologischen Verarbeitungseigenschaften der mit Wasser angemachten Verguß- und Einbettmassen im Hinblick auf die Viskosität, das Fließ- und Gießverhalten usw. bei gegebenenfalls gleichzeitiger Reduzierung des Bedarfs an Anmachwaser läßt sich in weiterer Ausgestaltung der Erfindung dadurch in überraschender Weise erreichen, daß der Vergußund Einbettmasse rheologieverbessernde Additive auf der Grundlage von Alkaliphosphaten und/oder Alkalialkylsiliconaten und deren Derivaten zugesetzt werden, die dann beim Anmachen mit Wasser wirksam werden.

Die eingangs erwähnten Rückgratbindemittel bestehen aus feinteiligem SiO₂ und/oder Al₂O₃ und stammen aus unterschiedlichen Herkunftsquellen. Es handelt sich dabei um amorphe anorganische Stoffe mit einer Partikelgröße von = 100 um.

Die weiter verbesserten Rückgratbindemittel zählen zu den anorganischen Verbindungen, deren praktische Anwendungen im hohen Maße auf ihren rheologischen Eigenschaften beruhen, die u.a. zusammenhängen mit:
- der Schichtstruktur
- dem plättchen- und/oder kugelförmigen Bau
- den negativen Ladungen
- der variablen Struktur an den Partikelrändern
- dem Kationen- und Anionenaustauschvermögen und
- der Fähigkeit verschiedenartiger Aggregate, Suspensionen und kolloidale Dispersionen in wässrigen Systemen zu bilden.

Das rheologische Verhalten von Suspensionen oder Dispersionen aus den erfindungsgemäßen Rückgratbindemitteln läßt sich zwar qualitativ erklären, jedoch entziehen sie sich bisher erfolgreich jeder mathematischen Behandlung. Einen entscheidenden Einfluß auf die rheologischen Eigenschaften haben beim Anmachen der erfindungsgemäßen Rückgratbindemittel mit Wasser, insbesondere beim m-Kaolin, die Erdalkali-Ionen, vorzugsweise Ca²⁺-Ionen, wie überraschenderweise gefunden wurde. Sie beeinflussen die Peptisation und bestimmen damit den notwendigen Bedarf an Anmachwasser, um zu niedrigen Viskositäten und guten Fließ- und Gießeigenschaften zu gelangen.

Es wurde nun überraschenderweise gefunden, daß dann dünnflüssigere Suspensionen bzw. Dispersionen aus dem erfindungsgemäßen Rückgratbindemittel und Wasser zu erhalten sind, wenn Alkali-Ionen, z.B. Na⁺-Ionen, dem Anmachwasser zugesetzt werden. Besonders vorteilhaft ist ein pH-Wert = 7,0, wodurch die positiven Randladungen und Kanten (+)/Flächen(-)-Kontakte vermieden werden. Zur Peptisation lassen sich u.a. Wassergläser verwenden, die ohnehin als Härter erfindungsgemäß gegenwärtig sind.

Für eine stärkere Verflüssigung reicht jedoch die Alkali-Ionen-Zufuhr bzw. -Konzentrationserhöhung (pH-Wert) allein nicht aus, weil dabei die negative Randladungsdichte nicht gleichzeitig vergrößert wird. Zur Verstärkung der Peptisation und Vergrößerung der Randladungsdichte, um zu dünnflüssigeren Verguß- und Einbettmassen zu gelangen, eignen sich, wie überraschenderweise gefunden wurde, erfindungsgemäß Alkaliphosphate und/oder Alkalialkylsiliconate. Die Alkalialkylsiliconate binden u.a. in Gegenwart von CO₂ zu den erfindugnsgemäßen Polyalkylkieselsäuren ab, da diese den ausgehärteten Massen zusätzlich hydrophobe Eigenschaften verleihen.

Diese erfindungsgemäßen Additivzusätze aus Alkaliphosphaten und/oder Alkalialkylsiliconaten verflüssigen nicht nur die Verguß- und Einbettmassen, sondern reduzieren gleichzeitig den Bedarf an Anmachwasser, ohne dabei die verbesserten Rheologie-Eigenschaften zu verändern.

Als rheologieverbessserende Additive gemäß vorliegender Erfindung eignen sich nachstehende Alkaliphosphate, Alkalialkylsiliconate und deren Derivate, sowie Gemische aus ihnen.

Bei den Alkaliphosphaten handelt es sich erfindungsgeäß um Meta-, Ortho- und/oder Polyphosphate. Besonders bevorzugt sind die Natrium- und/oder Kaliumphosphate, insbesondere die Natrium- und Kaliumpolyphosphate.

Die Alkalialkylsiliconate enthalten eine Alkylgruppe mit 1 bis 11 C-Atome, wobei die Natrium- und/oder Kaliumalkylsiliconate bevorzugt werden, deren Alkylgruppe eine Methyl-, Ethyl-, Propyl- und/oder Butylgruppe ist.

Besonders bevorzugt sind Gemische aus beiden Additivgruppen, weil
- Alkaliphosphate die höhere Verflüssigungskapazität einbringen und
- die Alkalialkylsiliconate über die Härtung Polyalkylkieselsäuren bilden, die die ausgehärteten Massen hydrophobieren.

Alle Additive sind in Wasser bei einem pH-Wert = 7,0 löslich.

Die Zusatzmengen der erfindungsgemäßen Additive können in relativ weiten Grenzen schwanken. Deren Gehalte in den eingangs erwähnten Verguß- und Einbettmassen werden sowohl von der Verflüssigungskapazität gegenüber den Massenzusammensetzungen als auch von der geforderten Hydrophobie in den ausgehärteten Massen bestimmt. Im allgemeinen liegen die Zusatzmengen bei den
- Alkaliphosphaten = 10,0 m-%, insbesondere = 5,0 m-% und
- Alkalialkylsiliconaten = 50,0 m-%, insbesondere = 25,0 m-%
bezogen auf die gesamten Feststoffanteile einer erfindungsgemäßen Masse.

Soweit die Additive in flüssiger Form vorliegen, werden sie dem Härter zugesetzt, sofern dieser als flüssiges Wasserglas verliegt. In allen anderen Einsatzfällen werden die Additive den Rückgratbindemitteln homogen untergemischt.

Die mit diesen Additiven modifizierten Verguß- und Einbettmassen sind nach dem Ansetzen mit Anmachwasser stabile und pumpfähige, dünnflüssige Suspensionen oder Dispersionen mit einem relativ hohen Feststoffgehalt.

Die Additive führen auch die im Anmachwasser vorhandenen mehrwertigen Kationen, wie z.B. Mg²⁺ , Ca²⁺ , Al³⁺ , in wasserlösliche Komplexe über, wodurch zusätzlich ein Ausflocken und ein schnelles Absetzen von Rückgratbindemittelteilchen verhindert wird. Damit verlängert sich die Verarbeitungszeit, weil der Verguß- und Einbettmassenansatz länger homogen bleibt.

## Patentansprüche

1. Vorrichtung zum Schutz bzw. zum Verbinden elektrischer Stromkreise, mit einem Gehäuse, das mindestens eine der Einführung mindestens eines elektrische Leitungen umfassenden Kabels dienende und mindestens eine weitere, die Herstellung fester oder lösbarer Verbindungen über die elektrischen Leitungen zu Anschluß- oder Steuerleitungen ermöglichende Öffnung umfaßt und mit einer isolierenden Verguß- bzw. Einbettmasse gefüllt ist, dadurch gekennzeichnet, daß die Verguß- bzw. Einbettmasse zur Sicherstellung einer hohen Temperaturbeständigkeit und damit Kurzschlußsicherheit auch unter extrem hohen Temperaturen bei dennoch hohem Isolationswiderstand aus einer Bindemittelmatrix beteht, die als Hauptbestandteil eine ausgehärtete Mischung an
a) feinteiligem SiO₂ und
b) zumindest teilweise wasserlöslichen Silicaten umfaßt.

2. Vorrichtung nach Anspruch 1, dadurch gekennzeichnet, daß das Verhältnis der Anteile a) : b) bei 80 bis 20 : 5 bis 60 liegt.

3. Vorrichtung nach Anspruch 1 oder 2, dadurch gekennzeichnet, daß der Bestandteil a) der Mischung aus einer Mischung aus feinteiligem SiO₂ und Al₂O₃ besteht.

4. Vorrichtung nach Anspruch 3, dadurch gekennzeichnet, daß das Gewichtsverhältnis von SiO₂ : Al₂O₃ bei 5 - 98 Gew.-% SiO₂ : 95 - 2 Gew.-% Al₂O₃ liegt, vorzugsweise 5 - 80 Gew.-% SiO₂ : 95 - 20 Gew.-% Al₂O₃ beträgt.

5. Vorrichtung nach einem der Ansprüche 1 bis 4, dadurch gekennzeichnet, daß der Bestandteil a) Stäube enthält, die aus der Gruppe von Stäuben aus Hochtemperaturschmelzprozessen, Filterstäuben, Elektrofilterasche aus Hochtemperaturkraftwerken und calcinierten Bauxiten ausgewählt sind.

6. Vorrichtung nach einem der Ansprüche 1 bis 4, dadurch gekennzeichnet, daß der Bestandteil a) durch dehydratisierte Aluminiumsilikate gebildet ist.

7. Vorrichtung nach einem der Ansprüche 1 bis 6, dadurch gekennzeichnet, daß der Bestandteil a) der Mischung zumindest teilweise unlösliches SiO₂ aus amorphen, disperspulverförmigen, wasserhaltigen Kieselsäuren enthält.

8. Vorrichtung nach einem der Ansprüche 1 bis 7, dadurch gekennzeichnet, daß der Bestandteil a) der Mischung wasserfreie Oxide der Elemente der zweiten Hauptgruppe des Periodensystems und/oder Klinkerphasen aus der Zementherstellung, insbesondere Alit und Tricalciumaluminat enthält.

9. Vorrichtung nach einem der Ansprüche 1 bis 8, dadurch gekennzeichnet, daß die teilweise wasserlöslichen Silicate in Anteil b) Alkali- und/oder Ammoniumsilicate sind.

10. Vorrichtung nach einem der Ansprüche 1 bis 9, dadurch gekennzeichnet, daß die teilweise wasserlöslichen Silicate des Anteiles b) in Form von Alkaliprekursoren bzw. Ammoniumprekursoren, insbesondere in Form von festem Alkalihydroxid in amorpher, dispers-pulverförmiger, wasserhaltiger Kieselsäure vorgesehen sind.

11. Vorrichtung nach Anspruch 9 doer 10, dadurch gekennzeichnet, daß das Molverhältnis zwischen Alkali bzw. Ammonium und Siliciumdioxid zwischen 1 bis 5, vorzugsweise zwischen 1,2 bis 4 Mol SiO₂ pro Mol Alkali bzw. Ammonium liegt.

12. Vorrichtung nach einem der Ansprüche 1 bis 11, dadurch gekennzeichnet, daß die Verguß- und Einbettmasse außer den Bestandteilen a) und b) als Zusatzbestandteil c) ferner Salze der Fluorokieselsäure und/oder organische Fluorosilikate in der aushärtenden Mischung enthält.

13. Vorrichtung nach Anspruch 12, dadurch gekennzeichnet, daß der Zusatzbestandteil c) ganz oder teilweise aus Salzen der Fluorokieselsäure der allgemeinen Formel
M^{I}2 SiF₆ ,
wobei M^{I} ein einwertiges Metall ist, besteht.

14. Vorrichtung nach einem der Ansprüche 1 bis 13, dadurch gekennzeichnet, daß als Zuschlagstoffe schwermetallfreie bzw. -arme anorganische, siliziumorganische und organische Füllstoffe enthalten sind.

15. Vorrichtung nach Anspruch 14, dadurch gekennzeichnet, daß die anorganischen Füllstoffe aus der Gruppe bestehend aus Quarzsanden, Quarzmehlen, Wollastonit, Glimmer, Talkum, Bariumsulfat, Calciumsulfat und dgl. ausgewählt sind.

16. Vorrichtung nach Anspruch 14, dadurch gekennzeichnet, daß die siliziumorganischen Füllstoffe inerte, schwermetallfreie, polymere Silikonverbindungen sind.

17. Vorrichtung nach Anspruch 14, dadurch gekennzeichnet, daß die organischen Füllstoffe Polykondensate aus der Gruppe der phenol-, melamin-, harnstoff-, polyimidharzhaltigen Duromeren sind.

18. Vorrichtung nach einem der Ansprüche 14 bis 17, dadurch gekennzeichnet, daß die Zuschlagstoffe Mikrohohlkörper mit Dichten = 1,0 g/cm³ und Partikelgrößen = 5.000 um sind.

19. Vorrichtung nach einem der Ansprüche 1 bis 18, dadurch gekennzeichnet, daß als Zuschlagstoffe anorganische oder organische Fasern in der Masse enthalten sind, die insbesondere aus der Gruppe aus Glasfasern, Steinwolle, Aluminiumsilicat-und Aluminiumoxidfasern, Keramik-Fasern, Siliciumcarbid-Fasern, Polyamid-, Polyacrylnitril-, Polyester, Phenol-, Aramid-, Baumwolle, Cellulosefasern ausgewählt sind.

20. Vorrichtung nach einem der Ansprüche 1 bis 19, dadurch gekennzeichnet, daß die Zuschlagstoffe im Mengenverhältnis von 1 bis 95 Gew.-% im Verhältnis zu den verbleibenden Stoffen vorhanden sind.

21. Vorrichtung nach einem der Ansprüche 1 bis 20, dadurch gekennzeichnet, daß schaumbildende Bestandteile, die beim Kontakt mit Wasser Gase freisetzen, enthalten sind.

22. Vorrichtung gemäß einem der vorhergehenden Ansprüche 1 bis 21, dadurch gekennzeichnet, daß die Härtung eine beschleunigende Verbindung und Wärmetönung von = 500 joule/g beim Kontakt und/oder Lösen mit Wasser verursacht und vorzugsweise aus der Gruppe der wasserfreien Oxide der Elemente der zweiten Hauptgruppe des periodischen Systems, der Klinkerphasen, namentlich Alit (C₃S) und Tricalciumaluminat (C₃A), Aluminiumphosphaten und/oder der Gruppe der Metallhydride stammt.

23. Vorrichtung gemäß einem der vorhergehenden Ansprüche 1 bis 22, dadurch gekennzeichnet, daß zur Reduktion des Bindemittel/Wasser-Faktors, zur Verflüssigung und/oder Plastifizierung Lignin-, Melamin- und Naphthalinaldehydkondensatsulfonate, Tenside, Abietinsäureabkömmlinge und Eiweißhydrolysate vorgesehen sind.

24. Verfahren zum Herstellen einer Vorrichtung nach einem der Ansprüche 1 bis 23, dadurch gekennzeichnet, daß das innige, homogene Gemisch der Bestandteile a), b) und ggf. c) mit oder ohne Zuschlagstoffe mit Wasser bis zur gieß- oder verformbaren Konsistenz angeteigt, verarbeitet und dann gehärtet wird.

25. Verfahren nach Anspruch 24, dadurch gekennzeichnet, daß die Härtung bei Temperaturen zwischen 10 und 120°C, insbesondere 50 und 120°C erfolgt.

26. Verfahren nach den Ansprüchen 24 oder 25, dadurch gekennzeichnet, daß die gehärteten Massen stufenweise bis über Einsatztemperatur nachgetempert werden.

27. Verfahren nach einem der vorstehenden Ansprüche 24 bis 26, dadurch gekennzeichnet, daß der die Einbettmasse bildende Mischung zur Stabilisierung eines hohen Isolationswiderstandes Hydrophobierungsmittel beigefügt werden.

28. Verfahren nach Anspruch 27, dadurch gekennzeichnet, daß zur wasserabweisenden Ausrüstung unpolare, organische, metall- und siliciumorganische und anorganische Verbindungen eingesetzt werden.

29. Verfahren nach Anspruch 28, dadurch gekennzeichnet, daß als Hydrophobierungsmittel Aluminium- und Zirkoniumsalze, Chromkomplexsalze, Silane Silikone und perfluorierte organische Verbindungen angewandt werden.

30. Verfahren nach Anspruch 27, gekennzeichnet durch Erhöhung der Erdalkali-Kationen-Konzentrationen in den Massezusammensetzungen.

31. Verfahren nach Anspruch 27, gekennzeichnet durch nachträgliche Imprägnierung o. dgl. mit Erdalkalioxiden.

32. Vorrichtung nach einem der Ansprüche 1 bis 31, dadurch gekennzeichnet, daß die Mischung Alkaliphosphate und/oder Alkalialkylsiliconate zur Verbesserung und Modifikation
a) der Verarbeitungsrheologie in Gegenwart von Wasser und
b) der Hydrophobie nach ihrer Härtung
enthält.

33. Vorrichtung nach Anspruch 32, dadurch gekennzeichnet, daß die Alkaliphosphate Meta-, Ortho- und/oder Polyphosphate, insbesondere deren Natrium- und Kaliumsalze sind.

34. Vorrichtung nach Anspruch 32, dadurch gekennzeichnet, daß die Alkalialkylsiliconate eine Alkylgruppe mit 1 bis 10 C-Atomen enthalten und insbesondere Natrium- und Kaliumsalze sind.
